(19) **Europäisches Patentamt / European Patent Office / Office européen des brevets**

(11) **EP 4 410 761 A1**

(12) **EUROPEAN PATENT APPLICATION**
published in accordance with Art. 153(4) EPC

(43) Date of publication:
**07.08.2024 Bulletin 2024/32**

(21) Application number: **22876475.9**

(22) Date of filing: **29.09.2022**

(51) International Patent Classification (IPC):
**C04B 35/587** (2006.01)    **F16C 33/32** (2006.01)

(52) Cooperative Patent Classification (CPC):
**C04B 35/587; F16C 33/32**

(86) International application number:
**PCT/JP2022/036504**

(87) International publication number:
**WO 2023/054611 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.09.2021 JP 2021158610**

(71) Applicants:
• **Kabushiki Kaisha Toshiba**
**Tokyo 105-0023 (JP)**

• **Toshiba Materials Co., Ltd.**
**Isogo-Ku**
**Yokohama-Shi**
**Kanagawa 235-0032 (JP)**

(72) Inventors:
• **FUNAKI, Kai**
**Yokohama-shi, Kanagawa 235-0032 (JP)**
• **YAMADA, Katsuhiko**
**Yokohama-shi, Kanagawa 235-0032 (JP)**
• **SANO, Shoya**
**Yokohama-shi, Kanagawa 235-0032 (JP)**

(74) Representative: **Henkel & Partner mbB**
**Patentanwaltskanzlei, Rechtsanwaltskanzlei**
**Maximiliansplatz 21**
**80333 München (DE)**

(54) **MATERIAL FOR CERAMIC BALL, CERAMIC BALL, AND PRODUCTION METHOD THEREFOR**

(57) The material for a ceramic ball according to an embodiment of the present invention has a spherical surface section and a band-shaped section that is formed in the shape of a band. The material for a ceramic ball is characterized by having a roundness C in the range of more than 0% but not more than 2.5%, where C represents a roundness as observed from the height direction of the band-shaped section. When the material for a ceramic ball is subjected to a grinding process, the durability of the sharpening stone can be improved. In addition, at least one of aluminum oxide, silicon nitride, boron nitride, and zirconium oxide is applicable as the ceramic.

FIG. 2

**Description**

**TECHNICAL FIELD**

Embodiments described later relate to a ceramic ball material, a ceramic ball, and a method for manufacturing the same.

**BACKGROUND ART**

Various ceramic materials have properties such as high hardness, insulation, and wear resistance. In particular, fine ceramics with enhanced purity and uniform particle size exhibit properties applicable in various fields of, for example, capacitors, actuator materials, and refractories. Products that take advantage of the wear resistance and insulation mentioned above are bearing balls, which are made of materials such as aluminum oxide, silicon nitride, zirconium oxide, silicon carbide, and sialon. For example, Japanese Patent Laid-Open No. 6-48813 (Patent Document 1) and Japanese Patent No. 2764589 (Patent Document 2) each disclose a bearing ball made of silicon nitride material, while Japanese Patent Laid-Open No. 60-18620 (Patent Document 3) discloses a bearing ball made of zirconium oxide material. Ceramic balls as described above are sometimes polished to suit various applications, such as bearing applications, through machining using surface plate as described in Patent No. 5334040 (Patent Document 5).

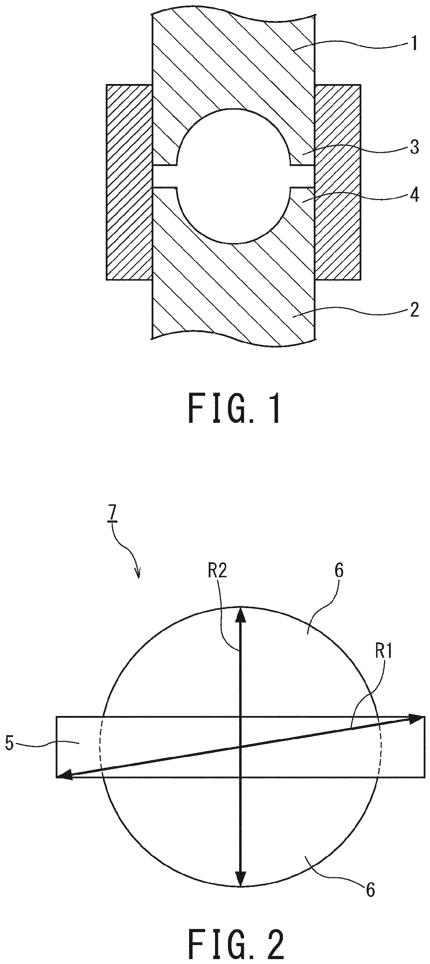

In the process of manufacturing such a bearing ball material, a method of sintering a green compact is employed. Press molding using molds is adopted as the molding method. Generally, the press molding is a method of inserting powder into a cavity between an upper mold 1 and a lower mold 2, as shown in FIG. 1, then applying pressure thereto. During the press molding, there must be a gap between a tip 3 of the upper mold 1 and a tip 4 of the lower mold 2 to protect the molds. As a result, a spherical portion and a band-shaped portion are formed in the green compact produced by the press molding. For example, Japanese Patent No. 4761613 (Patent Document 4) discloses a bearing ball material with a spherical portion and a band-shaped portion. FIG. 2 shows the ceramic ball material described in Patent Document 4. In FIG. 2, reference numeral 7 denotes a ceramic ball material, reference numeral 6 denotes a spherical portion, and reference numeral 5 denotes a band-shaped portion.

**PRIOR ART DOCUMENTS**

**PATENT DOCUMENT**

Patent Document 1: Japanese Patent Laid-Open No. 6-48813
Patent Document 2: Japanese Patent No. 2764589
Patent Document 3: Japanese Patent Laid-Open No. 60-18620
Patent Document 4: Japanese Patent No. 4761613
Patent Document 5: Japanese Patent No. 5334040

**SUMMARY OF THE INVENTION**

**PROBLEMS TO BE SOLVED BY THE INVENTION**

A ceramic ball material with a spherical portion 6 and a band-shaped portion 5 is polished to form a ceramic ball. The polished ceramic ball is particularly suitable for use as a bearing ball. A ceramic ball material 7 with the spherical portion 6 and the band-shaped portion 5 is sometimes referred to as a preprocessed ball. For example, the bearing ball is mirror-finished with a surface roughness Ra of 0.1 $\mu$m or less. The mirror finishing involves machining using surface plate.

Although ceramic materials have excellent wear resistance, they are brittle and have high hardness. Compared to metals, the ceramic materials thus require more processes to be machined. Especially, the initial process of increasing sphericity to the required value often takes up the majority of the machining time of the entire process due to its large machining allowance. The larger the sphericity (circularity) before machining, the longer this machining time is. Accordingly, it is necessary to make the sphericity of the ceramic ball material before machining as small as possible.

The present invention solves such problems and provides a ceramic ball material with high sphericity that shortens the machining time of a ceramic material during polishing, especially during machining using surface plate.

**MEANS FOR SOLVING THE PROBLEMS**

A ceramic ball material according to an embodiment including: a spherical portion; and a band-shaped portion formed in a band shape. When C denotes circularity of the band-shaped portion as observed from a height direction thereof, the circularity C is in a range of more than 0% and 2.5% or more.

**BRIEF DESCRIPTION OF THE DRAWINGS**

FIG. 1 is a diagram of an example of mold press molding.
FIG. 2 is a diagram of an example of a conventional ceramic ball material.
FIG. 3 is a diagram schematically showing a measurement direction (first measurement direction) in a ceramic ball material according to an embodiment.
FIG. 4 is a diagram schematically showing an image obtained by observing a ceramic ball material according to an embodiment from a first measurement direction.
FIG. 5 is a diagram schematically showing a measurement direction (second measurement direction) in a ceramic ball material according to an embodiment.
FIG. 6 is a diagram schematically showing an image obtained by observing a ceramic ball material according to an embodiment from a second measurement direction.
FIG. 7 illustrates the width of a band-shaped portion of a ceramic ball material according to an embodiment.
FIG. 8 illustrates the height of a band-shaped portion of a ceramic ball material according to an embodiment.
FIG. 9 is a diagram schematically showing the positional relationship between the image shown in FIG. 4 and the image shown in FIG. 6.
FIG. 10 is a diagram of an example of a radius obtained by measurement of circularity C in a ceramic ball material according to an embodiment.
FIG. 11 is a diagram of an example of a radius obtained by measurement of circularity C' in a ceramic ball material according to an embodiment.
FIG. 12 is a diagram of an example of rubber isostatic pressure molding.

**DESCRIPTION OF EMBODIMENTS**

A ceramic ball material according to an embodiment includes a spherical portion and a band-shaped portion formed in a band shape. When C denotes the circularity of the band-shaped portion as observed from a height direction thereof, the ceramic ball material has a circularity C in a range of more than 0% and 2.5% or more. The height direction is a direction orthogonal to the width direction of the band-shaped portion.

Preferably, the band-shaped portion is formed over the circumference because if the band-shaped portion exists in a part of the circumference, for example, stress concentration is likely to occur partially during machining using surface plate, which may cause cracking, chipping, or the like on the ball material.

More preferably, the circularity C is a value satisfying 0.01% or more and 2% or less. When the circularity C is small enough to satisfy 2.5% or less, particularly 2% or less, the initial contact area with the surface plate becomes uniform during the machining of the ceramic ball material, making it possible to reduce required machining amount. In terms of processability, thus, the smaller the circularity C is, the better. To achieve a circularity C of less than 0.01%, particularly 0%, on the other hand, the band-shaped portion must be extremely small, and the spherical portion must also have a small circularity. If the band-shaped portion itself is made too small to reduce the circularity of a green compact with the band-shaped portion, a boundary portion between an upper mold and a lower mold may not be sufficiently filled with granulated powder, whereby the yield may deteriorate. In terms of yield, therefore, the circularity C is more preferably 0.01% or more. The circularity C even more preferably has a value of 0.01% or more and 1.5% or less with respect to the average rA of a radius of the ceramic ball material.

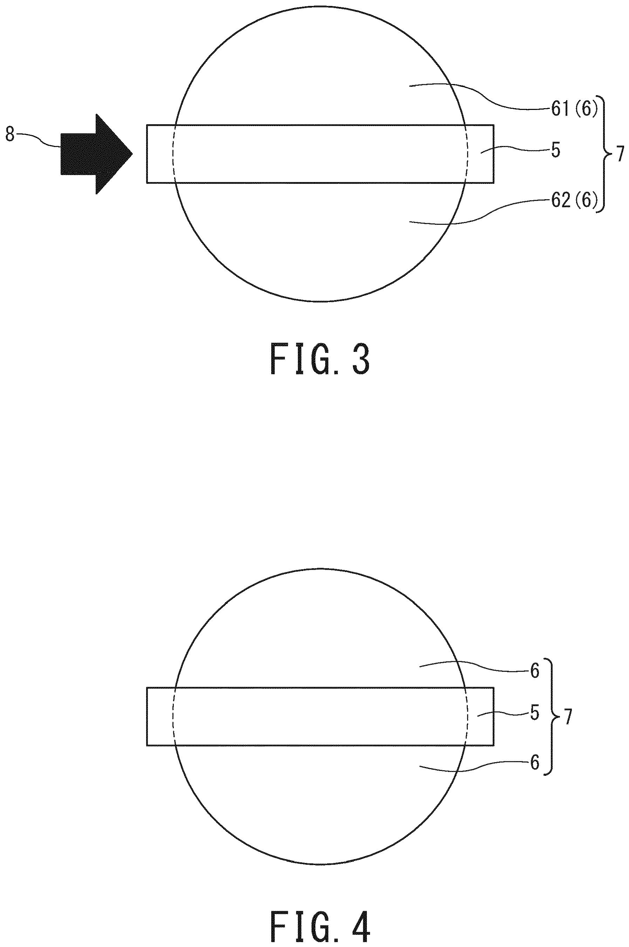

FIG. 3 shows a ceramic ball material according to an embodiment. Reference numeral 7 denotes a ceramic ball material, 6 denotes a spherical portion, and 5 denotes a band-shaped portion. The ceramic ball material 7 includes the spherical portion 6 and the band-shaped portion 5. In the ceramic ball material 7 shown in FIG. 3, a first measurement direction 8, a direction horizontal to an equatorial plane formed by the band-shaped portion 5, i.e., a measurement direction "when viewed from the height direction along the height of the band-shaped portion 5", is shown in the schematic diagram using an arrow. Preferably, a position where the band-shaped portion 5 is located includes the equatorial plane formed over the circumference of the ceramic ball material 7 such that an upper spherical portion 61 and a lower spherical portion 62 of the spherical portion 6 are substantially symmetric about the equatorial plane of the band-shaped portion 5. The band-shaped portion 5 preferably has a shape that is substantially symmetrical about the equatorial plane formed by the band-shaped portion 5. The equatorial plane formed by the band-shaped portion 5 is a plane passing through the center of the width of the band-shaped portion 5. FIG. 4 shows an image as observed from the first measurement direction 8. As can be seen from FIG. 4, the band-shaped portion 5 and the spherical portion 6 are observed simultaneously in the measurement from the measurement direction. When the band-shaped portion 5 is located at a position including the equatorial plane of the ceramic ball material 7 as shown in FIG. 4, a radius of the position of the band-shaped portion 5 observed from the height direction of the band-shaped portion 5 may be the largest.

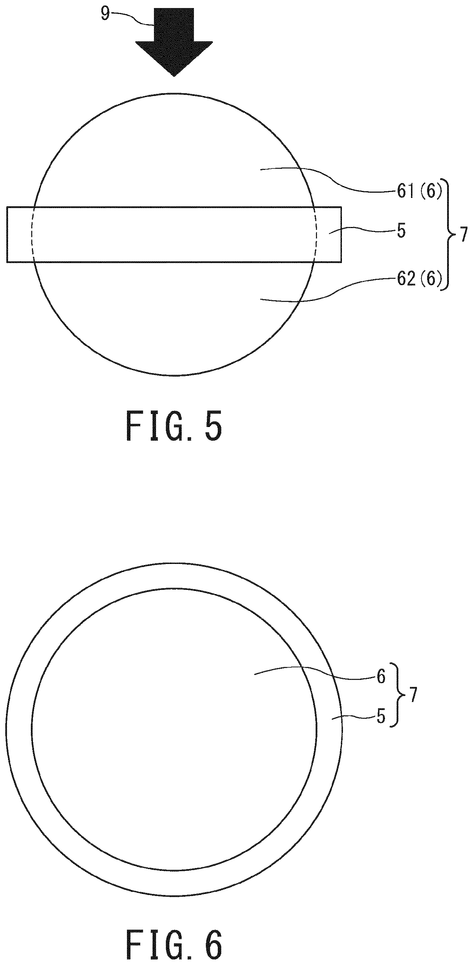

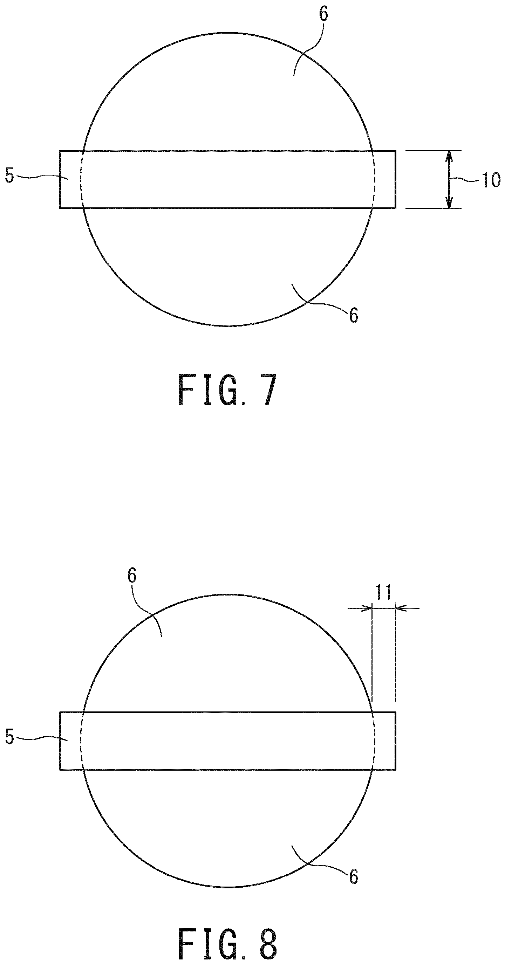

FIG. 5 shows a ceramic ball material according to an embodiment. Reference numeral 7 denotes a ceramic ball material, 6 denotes a spherical portion, and 5 denotes a band-shaped portion. In the ceramic ball material 7 shown in FIG. 5, a second measurement direction 9, a direction perpendicular to the equatorial plane formed by the band-shaped portion 5, i.e., a direction orthogonal to the height 11 (shown in FIG. 8) of the band-shaped portion 5 is shown in the schematic diagram. FIG. 6 shows an example of an image as observed from the second measurement direction 9.

FIG. 2 shows the ceramic ball material 7 when observed from the first measurement direction 8, as in FIG. 4. As shown in FIG. 2, reference character R1 denotes one or more diameters over the band-shaped portion 5 of the ceramic ball material 7, and R2 denotes one or more diameters over the spherical portion 6. In the ceramic ball material 7 shown in FIG. 2, the diameter R1 is a line that reaches from a point on the edge of the outer peripheral surface of the band-shaped portion 5 to a point on the opposite edge of the outer peripheral surface of the band-shaped portion 5 with the maximum length. In the ceramic ball material 7 shown in FIG. 2, the diameter R2 is a line that reaches from a point on the outer peripheral surface of the spherical portion 6 to a point on the outer peripheral surface of the spherical portion 6 with the maximum length. The ceramic ball material 7 shown in FIG. 2 is divided into 12 equal sections by 12 diameters, with each diameter divided by 2 to give a radius. Reference characters r1 to r12 each denotes the radius obtained depending on division sections. The average of the radii r1 to r12 is defined as an average radius rA. The number of divisions is optionally changed as long as the sufficient number of samples can be obtained in the evaluation of circularity described later. However, it is desirable to measure at least 12 divisions isostatically to increase the reliability of data. In FIGS. 2 and 4, the circularity may be calculated from one measurement direction 8, but the circularity may be calculated by measuring radii described later from a plurality of measurement directions 8 to calculate their maximum values, minimum values, and average values.

Here, the measurement of the diameters r1 to r12 is performed using a non-contact image dimension measuring device, Keyence IM-7000, or a device having a function equivalent thereto.

The measurement magnification is not limited but should be such that the ceramic ball material 7 occupies an area of 1/10 or more of one field of view and that the whole ceramic ball material 7 is within one field of view. If a ratio of the ceramic ball material 7 to one field of view is less than 1/10, it is not preferable because the accuracy may be reduced due to the influence of errors, which is not preferable. On the other hand, if the whole ceramic ball material 7 is not included in one field of view, it is not preferable because there may be some places where the diameter cannot be determined due to the unclear center or the like.

The circularity (circularity C (%)) of the ceramic ball material 7 when observed from the first measurement direction 8 is defined using the value obtained by dividing a difference in radius between an inscribed circle and a circumscribed circle of the target by an average value of the radius. The radius of the inscribed circle is the minimum value ($r_{min}$) of the radius obtained by observation from the first measurement direction 8. On the other hand, the circumscribed circle is the maximum value ($r_{max}$) of the radius obtained by observation from the first measurement direction 8. Thus, the circularity C (%) of the ceramic ball material 7 is determined by the following formula (1):

$$\text{Circularity C (\%)} = (r_{max} - r_{min})/rA \times 100 \qquad (1)$$

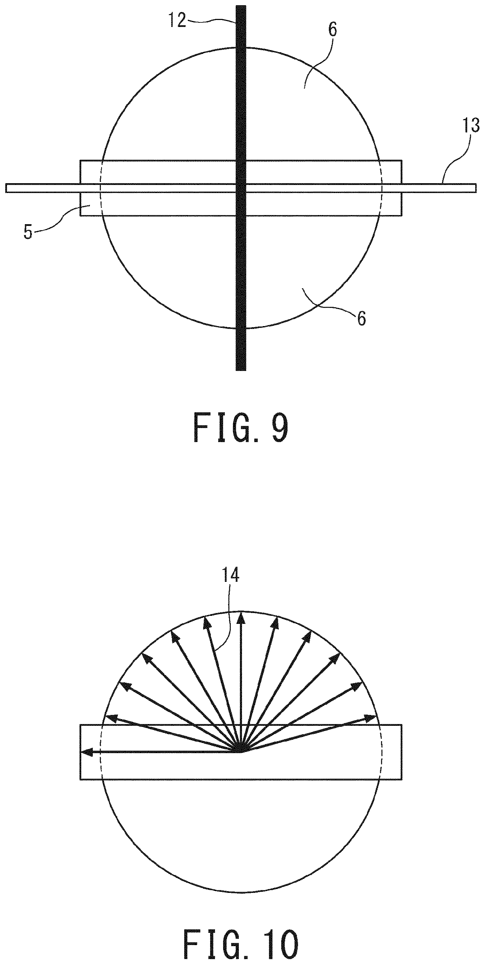

For example, when the ceramic ball material 7 observed from the first measurement direction 8 is isostatically divided into 12 sections, the difference in radius between the circumscribed circle and the inscribed circle is a difference between the maximum ($r_{max}$) and the minimum ($r_{min}$) of the radii r1 to r12 (12 radii shown in FIG. 10). Therefore, the radius of the circumscribed circle is the maximum ($r_{max}$) in r1 to r12. The radius of the inscribed circle is the minimum ($r_{min}$) in r1 to r12. The average (rA) of the radii is the average of r1 to r12. As can be seen from the formula (1), the smaller the numeral value of the circularity C is, the closer to a perfect circle it is.

FIG. 10 shows an example of the radius obtained by measurement at this time, where radii 14 denotes the radii r1 to r12 obtained by the measurement at the time of circularity measurement of the ceramic ball materials.

The ceramic ball material 7 includes the spherical portion 6 and the band-shaped portion 5. The band-shaped portion 5 is formed over the circumference of the surface of the spherical portion 6. This band-shaped portion 5 may partially have a concave portion. The spherical portion 6 being a spherical surface is sufficient. The spherical portion 6 can therefore be a perfect circle or an ellipsoid in shape. The band-shaped portion 5 is provided on the circumference of the spherical portion 6.

The circularity C determined from the formula (1) is preferably a value satisfying more than 0% and 2.5% or less, and more preferably a value satisfying 0.01% or more and 2% or less. The value of the circularity C refers to a value determined by calculating a difference between the maximum ($r_{max}$) and the minimum ($r_{min}$) of the radii r1 to r12 (12 radii shown in FIG. 10), dividing the calculated difference in radius by the average (rA) of the radii, and multiplying the value by 100 to convert it into a percentage (%). When the circularity C is small enough to satisfy 2.5% or less, particularly 2% or less, the initial contact area with the surface plate becomes uniform during the machining of the ceramic ball material 7, making it possible to reduce required machining amount. In terms of processability, thus, the smaller the circularity C is, the better. To achieve a circularity C of less than 0.01%, particularly 0%, on the other hand, it is necessary to make the band-shaped portion extremely small and the circularity of the spherical portion 6 small. If the band-shaped portion itself is made too small to reduce the circularity of a green compact serving as the base of the ceramic ball material 7 including the band-shaped portion 5, a boundary portion between an upper mold 1 and a lower mold 2 (shown in FIG. 1) for forming the green compact may not be sufficiently filled with granulated powder, whereby the yield may deteriorate. In terms of yield, therefore, the circularity C is more preferably 0.01% or more.

The circularity C determined from the formula (1) even more preferably has a value of 0.01% or more and 1.5% or less. The circularity C refers to a value determined by calculating a difference between the maximum ($r_{max}$) and the minimum ($r_{min}$) of r1 to r12 (12 radii shown in FIG. 10), dividing the calculated difference in radius by the average (rA) of the radii, and multiplying the value by 100 to convert it into a percentage (%). By setting the circularity C in this range, the effect of making the initial contact area with a surface plate uniform can be enhanced when additional polishing is performed using the surface plate. Furthermore, the rate of defects such as chipping, cracking, and uneven coloration on the surface of the ceramic ball material 7 that on the bearing surface can be suppressed.

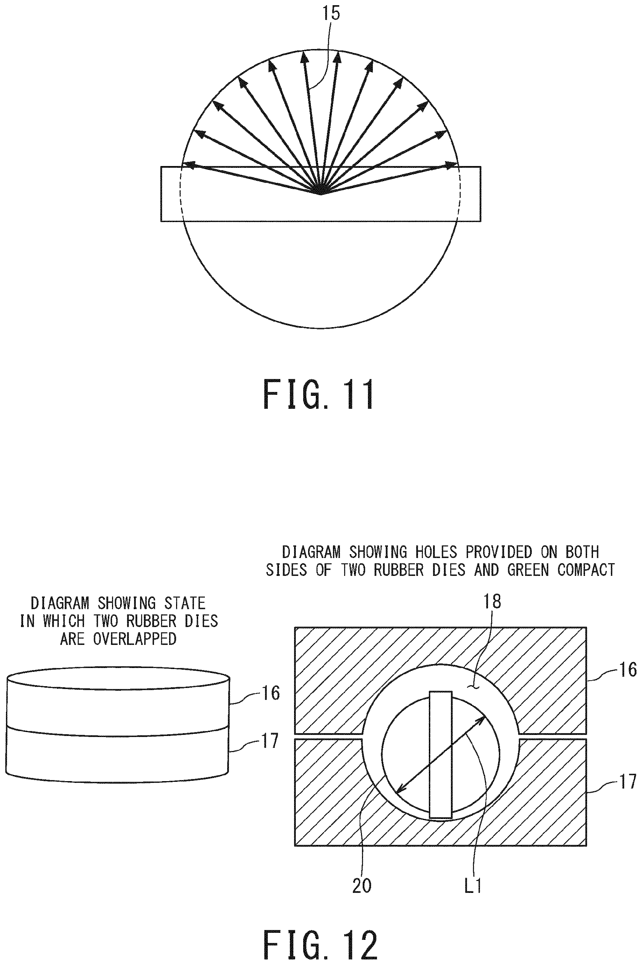

The circularity (circularity C') of the spherical portion 6 (portion excluding the band-shaped portion) when observed from the first measurement direction 8 preferably has a value of 0% or more and 1.5% or less. The circularity C' of the spherical portion 6 refers to a value determined by calculating a difference between the maximum ($r'_{max}$) and the minimum ($r'_{min}$) of r'1 to r'12 (12 radii shown in FIG. 11), dividing the calculated difference in radius by the average (r'A) of the radii, and multiplying the value by 100 to convert it into a percentage (%). The measurement points of only the spherical part 6, excluding the measured values of the band-shaped portion 5, are measured separately from FIG. 10 by dividing only the spherical part 6 into 12 sections, without using the values from the first measurement. In this case, the average of the radii excluding the measured values of the band-shaped portion 5 is defined as an average radius rA'. In addition, the circularity C' of the spherical portion 6 being 0 indicates a difference in value less than the resolution of the device.

FIG. 11 shows an example of the radius obtained by measurement at this time, where radii 15 denotes the radii r1 to r12 obtained by the measurement of only the spherical portion 6.

The circularity C' of the spherical portion 6 even more preferably has a value of 0% or more and 1.3% or less, where the average of the radii excluding the measured values of the band-shaped portion 5 is defined as an average radius rA'. The circularity C' of the spherical portion 6 is determined by the following formula (2):

$$\text{Circularity C' (\%)} = (r'_{max} - r'_{min})/rA' \times 100 \qquad (2)$$

A measurement direction from a direction orthogonal to the height direction of the band-shaped portion is defined as a second measurement direction. In FIG. 5, this second measurement direction is denoted by 9. In FIG. 6, is a schematic diagram projected from the second measurement direction 9, radii are determined by following the same procedure as in FIG. 4 with the diameters at 12 locations, and the maximum ($r''max$), the minimum ($r''min$), and the average (rA'') of the radii are then obtained to determine circularity C'' (%). In this case, the average radius and circularity of the ceramic ball material 7 are defined as rA'' and C'', respectively. The circularity C'' of the ceramic ball material 7 is determined by the following formula (3):

$$\text{Circularity C'' (\%)} = (r''_{max} - r''_{min})/rA'' \times 100 \qquad (3)$$

The circularity C'' preferably has a value of 0% or more and 1.5% or less. The circularity C'' preferably has a value of 0.01% or more and 1.0% or less. The circularity C'' refers to a value determined by calculating a difference between the maximum ($r''_{max}$) and the minimum ($r''_{min}$) of r''1 to r''12 (12 radii that are not shown), dividing the calculated difference in radius by the average (r"A) of the radii, and multiplying the value by 100 to convert it into a percentage (%). When the circularity C" is in this range, the initial contact area with the surface plate becomes uniform during the machining of the ceramic ball material 7, making it possible to reduce required machining amount. When the circularity C" is not in this range, the circularity on the other measurement surfaces may also increase, leading to an increase in the machining amount required.

The plane projected from the first measurement direction 8 shown in FIG. 3 is a measurement surface 12 when measured from the first measurement direction 8. The measurement surface 12 when measured from the first measurement direction 8 is also referred to as a plane 12.

The plane projected from the second measurement direction 9 shown in FIG. 5 is a measurement surface 13 when measured from the second measurement direction 9. The measurement surface 13 when measured from the second measurement direction 9 is also referred to as a plane 13. As shown in FIG. 9, the plane 12 and the plane 13 intersect substantially perpendicularly.

The ceramic ball material 7 preferably contains any one or more of aluminum oxide, silicon nitride, boron nitride, silicon carbide, zirconium oxide, and sialon in a total amount of 85% by mass or more. The ceramic ball material 7 is made of a ceramic sintered body. The content in the ceramic sintered body is 85% by mass or more in total of one or more of aluminum oxide, silicon nitride, boron nitride, and zirconium oxide. In other words, the ceramic sintered body may contain 15% by mass or less of substances other than those mentioned above.

The bearing ball material to be used includes an aluminum oxide sintered body, a silicon nitride sintered body, a boron nitride sintered body, a zirconium oxide sintered body, a silicon carbide sintered body, a sialon sintered body, a Zirconia-Doped Alumina (obtained by mixing aluminum oxide and zirconium oxide with a total content of 85% by mass or more) sintered body, and a sialon sintered body. Therefore, only one type may account for 85% by mass or more of the content, as in the case of the aluminum oxide sintered body, the silicon nitride sintered body, the boron nitride sintered body, the zirconium oxide sintered body, and the silicon carbide sintered body. Alternatively, two or more types may account for 85% by mass or more of the content in total, as in the case of the Zirconia-Doped Alumina sintered body and the sialon sintered body. Among them, bearing ball materials made of the silicon nitride sintered body are particularly excellent in wear resistance. Thus, a sintered body containing 85% by mass or more of silicon nitride are preferred.

The aluminum oxide sintered body and the zirconium oxide sintered body each have a Vickers hardness of about 1,200 or more and 1,700 or less but a toughness value of about 3 MPa·m$^{1/2}$ or more and 6 MPa·m$^{1/2}$ or less.

On the other hand, the silicon nitride sintered body has a Vickers hardness of about 1,400 or more and 1,800 and a toughness value of about 5 MPa·m$^{1/2}$ or more and 10 MPa·m$^{1/2}$ or less.

In other words, the silicon nitride sintered body has excellent toughness and Vickers hardness among ceramics. Because of these properties, the silicon nitride sintered body in particular has excellent wear resistance.

The silicon nitride sintered body has a structure mainly composed of β-type silicon nitride crystal particles. The β-type silicon nitride crystal particles have elongated shapes. Since the elongated crystal particles are intertwined in a complicated manner, the silicon nitride sintered body has a high toughness value.

The silicon nitride sintered body also has an aspect of very poor polishing efficiency due to its high mechanical strength. As mentioned above, improved (i.e., smaller) circularity can reduce the machining allowance. The polishing efficiency can be improved even in the ceramic ball material 7 made of a ceramic sintered body with high strength, such as the silicon nitride sintered body, by reducing the machining allowance.

Next, a method for manufacturing the ceramic ball material 7 is described. The manufacturing method is not particularly limited as long as the ceramic ball material 7 according to the embodiment satisfies the above configuration, but the following manufacturing method is a method for efficiently manufacturing the ceramic ball material. The manufacturing method is described using the silicon nitride sintered body as an example.

First, a sintering aid, an additive, a solvent, a binder, and the like are added in appropriate amounts to silicon nitride as a raw material, then mixed, crushed, and granulated by with a spray dryer. Through this process, granulated powder is prepared as the raw material powder. When the total of the silicon nitride powder and the sintering aid powder is 100% by mass, the silicon nitride powder is preferably 85% by mass or more. The additive is a plasticizer.

The solvent is water, an organic solvent, or a mixture thereof. Examples of the organic solvent include compounds containing alcohols, ketones, benzene, and ethers. The alcohols include methanol, ethanol, propanol, butanol, hexanol, heptanol, octanol, and phenol. The ketones include acetone and diethyl ketone. The ethers include diethyl ether and dimethyl ether. The organic solvent preferably has a linear carbon chain of 25 or more. If the number of linear chains is more than 25, volatilization is less likely to occur. As a result, it may be difficult to control the volatilization during the degreasing process. The binder is an organic substance. The amount of the binder added is 3% by mass or more and 20% by mass or less when the total of the silicon nitride powder and the sintering aid powder is 100% by mass. The circularity of the surface including the spherical portion 6 and the band-shaped portion 5 can be reduced in a process described later by a combination of adjusting the amount of the binder and adjusting the shape of the mold (making the spherical portion into an aspheric shape).

Next, press molding is performed using the granulated powder, examples of which include a molding method using the upper mold 1 and the lower mold 2. The spherical shape inside the upper mold 1 and the lower mold 2 determines the spherical portion 6 of the ceramic ball material 7. At this time, balls formed by a uniaxial pressure press have variations in the forming density inside the balls depending on the direction perpendicular to the pressing, the vertical direction, and the proximity distance between the upper mold 1 and the lower mold 2. Therefore, especially when mold press molding is combined with isotropic pressure molding (such as CIP treatment), the circularity during molding and the circularity after isostatic pressure molding have different values. The three-dimensional shape of the spherical portion formed by the mold is thus made into an aspheric shape shifted from the true sphere so that the circularity is increased in the later process. As a result, since the ceramic ball material 7 having better circularity can be formed, the circularity C determined from the formula (1) can be within the range of more than 0% and 2.5% or less of the average diameter rA.

The green compact obtained by press molding is to have a spherical portion corresponding to the spherical portion 6 and a band-shaped portion corresponding to the band-shaped portion 5.

The band-shaped portion of the resulting green compact is optionally subjected to a removal process. Any item may be used for this removal process as long as it can remove the band-shaped portion. Examples of items used to remove the band-shaped portion include files such as sandpaper, emery paper, and abrasive paper.

The removal of the band-shaped portion is preferably performed after press molding and before hot isostatic pressing (HIP). In view of the ease of removal of the band-shaped portion, this process is preferably performed before sintering, more preferably before degreasing, and even more preferably before cold isostatic pressing (CIP).

It is preferable that this process of removing the band-shaped portion is performed without applying too much pressure.

Since excessive pressure induces chipping and cracking, it is necessary to control the applied pressure. Even after the removal process of the band-shaped portion, it can be determined that the green compact has had a band-shaped portion because of its stripe-shaped trace with the band-shaped portion. For this reason, even in the process of removing the band-shaped portion, the green compact is defined as having a band-shaped portion.

It is also preferable to perform isotropic pressure molding on the green compact after press molding (including those that have undergone processes such as removal of the band-shaped portion). Through isostatic pressing, it is possible to uniformly apply compression to the granulated powder in the green compact, thereby reducing the remaining crushed granulated powder in the green compact. By reducing the remaining crushed granulated powder, it is possible to control the shrinkage rate in the sintering process.

An isostatic pressure molding method using rubber dies is described as an example of isostatic pressure molding. FIG. 12 illustrates an example of a disk-shaped rubber die. In the figure, reference numerals 16 and 17 each denote a disk-shaped rubber die, and 18 denotes a space.

The disk-shaped rubber dies 16 and 17 have hemispherical holes on both surfaces that are larger than the diameter of the green compact by about 1% or more and 35% or less. By placing the green compact 20 in the holes and overlapping the disk-shaped rubber dies 16 and 17, the green compact 20 is sealed in space 18 surrounded by the disk-shaped rubber dies 16 and 17. A hydrostatic pressure higher than the pressure at the time of forming is applied to the disk-shaped rubber dies 16 and 17, thereby making it possible to uniformly apply compression to the green compact 20. This process can reduce the remaining crushed granulated powder. The band-shaped portion of the green compact 20 is preferably placed perpendicular to a plane formed by the cylinder of the disk-shaped rubber dies 16 and 17. The disk-shaped rubber dies 16 and 17 to be used preferably have a Shore hardness Hs of 30 or more and 50 or less. With the hardness of the disk-shaped rubber dies 16 and 17 in this range, the disk-shaped rubber dies 16 and 17 can have a deformability that allows uniform contact between the surface of the green compact 20 and the rubber dies. The disk-shaped rubber dies 16 and 17 also have good durability.

Since the green compact obtained in this process is isostatically pressurized, a shape similar to that of the sintered ceramic ball material 7 can be formed. The circularity C at this time may be measured to adjust a curved surface formed by the upper mold 1 and the lower mold 2 during press molding.

Subsequently, a degreasing process is performed to degrease the green compact after press molding (including those that have undergone processes such as removal of the band-shaped portion and isostatic pressure molding), in which the green compact is heated at a temperature equal to or higher than the decomposition temperature of organic components such as binder to evaporate the organic components. The degreasing process may be performed in a nitrogen atmosphere or an air atmosphere. Through the degreasing process, a degreased body can be formed.

Next, a sintering process is performed to sinter the degreased body. The sintering process is preferably performed at a temperature of 1700°C or more and 2,000°C or less. The sintering process is preferably performed in a nitrogen atmosphere. The pressure during sintering is preferably in the range of atmospheric pressure or more and 300 MPa or less. Note that the atmospheric pressure is 0.10133 MPa (= 1 atm). The sintered body obtained by the sintering process may be subjected to a hot isostatic pressing (HIP) treatment. Through this process, a ceramic ball material 7 having less density unevenness can be obtained. The ceramic ball material 7 thus obtained is a ceramic sintered body having a theoretical density of 98% or more. A method of polishing the finished ceramic ball material 7 may also be employed to adjust the spherical portion 6 and the band-shaped portion 5, i.e., to adjust the circularity C. However, this method is not desirable because additional polishing steps are required. The manufacturing method described above is desirable.

A ceramic ball can be manufactured by polishing the ceramic ball material 7. A typical polishing process for balls involves machining using surface plate.

In the polishing process, for example, the ceramic ball material 7 is first inserted into a cavity between upper and lower surface plates disposed in parallel. By the movement of the polishing surface plates, the ceramic ball material 7 is then machined into a true sphere in shape. Fixed abrasive grains of diamond may be used in a polishing method to increase the processing accuracy of the polished surface. When the ceramic ball obtained by polishing the ceramic ball material 7 is used for a bearing, the ceramic ball is referred to as a bearing ball.

The surface roughness of bearing balls is specified in ASTM F2094. Depending on the application, bearing balls are graded according to ASTM F2094 and polished to an arithmetic surface roughness Ra according to that grade. As the grade increases, some bearing balls are polished to a mirror finish with an arithmetic surface roughness Ra of 0.01 $\mu$m or less.

In the ceramic ball material 7 according to the embodiment, the circularity C of the curved surface formed by the spherical portion 6 and the band-shaped portion 5 as measured in the first measurement direction 8 is in a range of more than 0% and 2.5% or less. As a result, surface contact of a grindstone with, for example, a polishing surface plate can be achieved, thereby preventing the ceramic ball material 7 from being damaged in the polishing process. In addition, the durability of the polishing surface plate in the polishing process can be improved. Therefore, providing a ceramic ball as a bearing ball material with a small machining allowance is expected to reduce the time and cost required for polishing, as well as the polishing material and the polishing amount.

A (small) ceramic ball with improved sphericity as described above is particularly suitable for use in a bearing which is polished, for example. The ceramic ball used in bearing applications may be made of another material, such as SUS, for races such as inner and outer rings, or the outer and inner ring units as described above may also be made of ceramics. Therefore, the whole wear resistant member used in the bearing may be an all-ceramic bearing made of ceramics, or only the bearing ball may be a ceramic bearing. When used in all-ceramic bearing applications, the races, such as the inner and outer ring units, do not have to be made of the same main raw material as the bearing ball, but can be made of the same main raw material. They may be applied to bearings without grease.

(Examples)

(Examples 1 to 8 and Comparative Examples 1 to 3)

Sintering aids, additives, solvents, and binders were added to raw ceramic powder, then mixed, crushed, and granulated with a spray dryer. Examples 1 to 3 and 6 to 8 were each a silicon nitride sintered body, Example 4 was an aluminum oxide sintered body, and Example 5 was a zirconium oxide sintered body. The silicon nitride sintered body contained silicon nitride in an amount of 85% by mass or more. The aluminum oxide sintered body contained aluminum oxide in an amount of 85% by mass or more. The zirconium oxide sintered body contained zirconium oxide in an amount of 85% by mass or more. When the total of the main components and a sintering aid was 100 parts by mass, the amount of binder added was 3 parts by mass or more and 20 parts by mass or less.

Next, press molding was performed using the granulated powder, which is die forming using upper and lower molds. The die forming was followed by isostatic pressure molding, which involved the use of a disk-shaped rubber die having a Shore hardness Hs of 30 or more and 50 or less (shown in FIG. 12). The isostatic pressure molding was performed with disk-shaped rubber dies 16 and 17 having hemispherical holes on both surfaces that were larger than a diameter L1 of a green compact 20 by about 1% or more and 35% or less. The band-shaped portion (corresponding to the band-shaped portion 5 of the ceramic ball material 7) of the green compact 20 was placed perpendicular to the cylindrical direction of the rubber dies. In this state, a hydrostatic pressure higher than the pressure at the time of forming was applied in the process of isostatic pressure molding.

Next, a sintering process was performed at 1,700 to 1,900°C in a nitrogen atmosphere at atmospheric pressure, followed by HIP treatment at 1,600 to 1,900°C in a nitrogen atmosphere at a pressure of 150 MPa or more and 300 Mpa or less.

Through this process, ceramic ball materials according to Examples were produced. Comparative Examples were prepared by adding 3 parts by mass of binder when the total of the main component and the sintering aid was 100 parts by mass. The isostatic pressure molding was not performed after the molding process.

The shapes of the ceramic ball materials according to Examples and Comparative Examples were each measured. Each sample had a band-shaped portion of 0.5 mm or more and 3 mm or less in width and of 0.05 mm or more and 0.2 mm or less in height. Reference numeral 10 denotes the width of the band-shaped portion schematically shown in FIG. 7. Reference numeral 11 denotes the height of the band-shaped portion schematically shown in FIG. 8. The respective measurement methods are as described above. Table 1 shows the results.

[Table 1]

| | Ceramic Ball Material | | |
|---|---|---|---|
| | Ceramic sintered body | C [%] | C' [%] |
| Example 1 | Silicon Nitride | 1.6 | 1.45 |
| Example 2 | Silicon Nitride | 1.3 | 1.25 |
| Example 3 | Silicon Nitride | 0.5 | 0.34 |
| Example 4 | Aluminum Oxide | 1.0 | 0.98 |
| Example 5 | Zirconium Oxide | 1.3 | 1.28 |
| Example 6 | Silicon Nitride | 0.03 | 0.02 |
| Example 7 | Silicon Nitride | 2.2 | 1.30 |
| Example 8 | Silicon Nitride | 2.4 | 1.60 |
| Comparative Example 1 | Silicon Nitride | 3.5 | 3.01 |
| Comparative Example 2 | Aluminum Oxide | 2.8 | 1.85 |
| Comparative Example 3 | Aluminum Oxide | 3.1 | 2.56 |

| | Ceramic Ball Material | |
|---|---|---|
| | C" [%] | Diameter after Polishing [inch] |
| Example 1 | 0.8 | 1/4" |
| Example 2 | 0.5 | 5/16" |
| Example 3 | 0.1 | 1" |
| Example 4 | 0.4 | 5/8" |
| Example 5 | 0.4 | 3/4" |
| Example 6 | 0.01 | 1-3/8" |
| Example 7 | 0.7 | 1" |
| Example 8 | 1.0 | 5/8" |
| Comparative Example 1 | 0.8 | 5/16" |
| Comparative Example 2 | 0.7 | 5/8" |
| Comparative Example 3 | 1.1 | 3/4" |

Example 1 was a ceramic ball material for ceramic balls to be formed into 1/4 inches (6.35 mm) after polishing process. Example 2 and Comparative Example 1 were each a ceramic ball material for ceramic balls of 5/16 inches (7.9375 mm). Examples 3 and 7 were each a ceramic ball material for ceramic balls of 1 inch (25.4 mm). Examples 4 and 8 and Comparative Example 2 were each a ceramic ball material for ceramic balls of 5/8 inches (15.875 mm). Example 5 and Comparative Example 3 were each a ceramic ball material for ceramic balls of 3/4 inches (19.05 mm). Example 6 was a ceramic ball material for ceramic balls of 11/8 inches (34.925 mm). All of the above are available for bearing balls.

Comparative Examples 1, 2, and 3 had a circularity C determined from the formula (1) of more than 2.5% and a circularity C' determined from the formula (2) of more than 1.5%. Comparative Example 3 also had a circularity C'' determined from the formula (3) of not more than 1.5% but more than 1.0%.

The ceramic ball materials of Examples and ceramic ball materials of Comparative Examples were evaluated for polishing efficiency. The evaluation was conducted by examining how many batches the surface grindstone could withstand when each ceramic ball material was machined using a #180 surface grindstone, provided that one batch was defined according to the size of the ceramic ball materials. The polishing process was performed so that the ceramic balls each had a surface roughness Ra of 0.01 μm or less. The rate of occurrence of defects such as chipping of the ceramic ball materials during the polishing process (referred to as the "percentage of material chipping defects" in Table 2) was also examined. The average of 10 arbitrary diameter deviations, deviations of the diameter of the intended polished ceramic balls, was also examined. The diameter variations were defined as differences between the minimum and maximum diameters when the entire circumference of the sphere was measured. Table 2 shows the results.

[Table 2]

| | The Number of Processing [/ Batch] | The Number of durability of Whetstone [Times] | Percentage of Material Chipping Defects [%] | Diameter Variations [μm] |
|---|---|---|---|---|
| Example 1 | 20,000 | 20 | 0.01 | 0.06 |
| Example 2 | 15,000 | 20 | 0.01 | 0.08 |
| Example 3 | 400 | 20 | 0.00 | 0.12 |
| Example 4 | 2,000 | 20 | 0.00 | 0.13 |
| Example 5 | 2,000 | 20 | 0.00 | 0.20 |
| Example 6 | 150 | 20 | 0.00 | 0.20 |
| Example 7 | 400 | 15 | 0.01 | 0.14 |
| Example 8 | 2,000 | 17 | 0.01 | 0.13 |
| Comparative Example 1 | 15,000 | 4 | 2.00 | 0.20 |
| Comparative Example 2 | 2,000 | 6 | 1.00 | 0.19 |
| Comparative Example 3 | 2,000 | 5 | 2.20 | 0.26 |

As can be seen from Table 2, the durability of the grindstone was improved when the ceramic ball materials according to Examples were polished to form ceramic balls. The rate of defects of the ceramic ball materials declined. In addition, the deviation from the target diameter after polishing was also reduced. Therefore, the ceramic ball material according to the embodiment obviously has good polishing efficiency.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

**REFERENCE SIGNS LIST**

1 Upper mold
2 Lower mold
3 Tip of upper mold
4 Tip of lower mold
5 Band-shaped portion
6 Spherical portion
61 Upper spherical portion
62 Lower spherical portion
7 Ceramic ball material
8 First measurement direction
9 Second measurement direction

10    Width of band-shaped portion
11    Height of band-shaped portion
12    Measurement surface when measured from first measurement direction
13    Measurement surface when measured from second measurement direction
14    Radius obtained by measurement at the time of circularity measurement of ceramic ball material
15    Radius obtained by measurement of spherical portion only
16    Disk-shaped rubber die
17    Disk-shaped rubber die
18    Space of inner shape of rubber die
20    Green compact

**Claims**

1.  A ceramic ball material comprising:

    a spherical portion; and
    a band-shaped portion formed in a band shape, wherein
    when C denotes circularity of the band-shaped portion as observed from a height direction thereof, the circularity C is in a range of more than 0% and 2.5% or more.

2.  The ceramic ball material according to claim 1, wherein when C' denotes circularity of the spherical portion as observed from the height direction of the band-shaped portion, the circularity C' is in a range of 0% or more and 1.5% or less.

3.  The ceramic ball material according to claim 1 or 2, wherein circularity C' of the spherical portion as observed from the height direction of the band-shaped portion is in a range of 0% or more and 1.3% or less.

4.  The ceramic ball material according to any one of claims 1 to 3, wherein when C" denotes circularity of the band-shaped portion as observed from a direction orthogonal to the height direction thereof, the circularity C'' is in a range of 0% or more and 1.5% or less.

5.  The ceramic ball material according to any one of claims 1 to 4, wherein the ceramic ball material comprises any one or more of aluminum oxide, silicon nitride, boron nitride, zirconium oxide, silicon carbide, and sialon in an amount of 85% by mass or more.

6.  The ceramic ball material according to any one of claims 1 to 5, which is a sintered body comprising 85% by mass or more of silicon nitride.

7.  A method for manufacturing a ceramic ball, comprising polishing the ceramic ball material according to any one of claims 1 to 6.

8.  A ceramic ball obtained by polishing the ceramic ball material according to any one of claims 1 to 6.

9.  A bearing using the ceramic ball according to claim 8.

FIG. 1

FIG. 2

FIG. 3

FIG. 4

FIG. 5

FIG. 6

FIG. 7

FIG. 8

FIG. 9

FIG. 10

15

FIG. 11

DIAGRAM SHOWING HOLES PROVIDED ON BOTH
SIDES OF TWO RUBBER DIES AND GREEN COMPACT

DIAGRAM SHOWING STATE
IN WHICH TWO RUBBER DIES
ARE OVERLAPPED

18

16

16

17

17

20      L1

FIG. 12

## INTERNATIONAL SEARCH REPORT

| | International application No. |
|---|---|
| | **PCT/JP2022/036504** |

| A. | CLASSIFICATION OF SUBJECT MATTER |
|---|---|

*C04B 35/587*(2006.01)i; *F16C 33/32*(2006.01)i
FI:   C04B35/587; F16C33/32

According to International Patent Classification (IPC) or to both national classification and IPC

| B. | FIELDS SEARCHED |
|---|---|

Minimum documentation searched (classification system followed by classification symbols)

C04B35/587; F16C33/32

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2000-337386 A (KYOCERA CORP) 05 December 2000 (2000-12-05)<br>    paragraphs [0016]-[0040], fig. 1 | 1-9 |
| A | JP 2001-163673 A (TOSHIBA CORP) 19 June 2001 (2001-06-19)<br>    entire text, all drawings | 1-9 |
| A | JP 2-214606 A (TOSHIBA CORP) 27 August 1990 (1990-08-27)<br>    entire text, all drawings | 1-9 |
| A | JP 2011-93789 A (HITACHI METALS LTD) 12 May 2011 (2011-05-12)<br>    entire text, all drawings | 1-9 |
| A | JP 2013-209283 A (KYOCERA CORP) 10 October 2013 (2013-10-10)<br>    entire text, all drawings | 1-9 |
| A | JP 2003-137640 A (NGK SPARK PLUG CO LTD) 14 May 2003 (2003-05-14)<br>    entire text, all drawings | 1-9 |
| P, A | WO 2022/138579 A1 (TOSHIBA CORP) 30 June 2022 (2022-06-30)<br>    entire text, all drawings | 1-9 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **26 October 2022** | **08 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/036504**

| Patent document cited in search report | | | Publication date (day/month/year) | Patent family member(s) | Publication date (day/month/year) |
|---|---|---|---|---|---|
| JP | 2000-337386 | A | 05 December 2000 | (Family: none) | |
| JP | 2001-163673 | A | 19 June 2001 | US 6485830 B1 whole document, whole drawing | |
| JP | 2-214606 | A | 27 August 1990 | (Family: none) | |
| JP | 2011-93789 | A | 12 May 2011 | (Family: none) | |
| JP | 2013-209283 | A | 10 October 2013 | (Family: none) | |
| JP | 2003-137640 | A | 14 May 2003 | (Family: none) | |
| WO | 2022/138579 | A1 | 30 June 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6048813 A
- JP 2764589 B
- JP 60018620 A
- JP 5334040 B
- JP 4761613 B